# EUROPEAN PATENT APPLICATION

(11) **EP 4 844 598 A1**
(43) Date of publication of application: **25.11.2026**
(21) Application number: 26180410.8
(22) Date of filing: 21.05.2026
(51) Int. Cl.: G06F 13/42

(54) **GENERAL-PURPOSE SERIAL COMMUNICATION DEVICE AND MICROCONTROLLER UNIT INCLUDING THE SAME**

(30) Priority: 22.05.2025 KR 20250067121
(71) Applicant: LX Semicon Co., Ltd., Daejeon 34027 (KR)
(72) Inventor: JI, Gihyeon, 34027 Daejeon (KR); PARK, JuHee, 34027 Daejeon (KR); YANG, Soeun, 34027 Daejeon (KR); YUN, Ilhyun, 34027 Daejeon (KR)
(74) Representative: Ter Meer und Partner mbB

(57) **Abstract**

The general-purpose serial communication device comprises: a register file storing a Master Output Slave Input (MOSI) transmitted from a master device; a buffer including a plurality of flip-flops that perform a shift-left operation to the Master Output Slave Input in response to a clock signal transmitted from the master device; and a control circuit latching write data into upper flip-flops among the flip-flops and latching a write address into lower flip-flops among the flip-flops when the Master Output Slave Input includes the write data and the write address, the control circuit latching a read address into the lower flip-flops among the flip-flops and reading a read data corresponding to the read address in the register file to latch the read data into the upper flip-flops when the Master Output Slave Input includes the read address.

## Description

### [Technical Field]

The present disclosure relates to a communication interface, and more specifically, to a general-purpose serial communication device.

### [Background Art]

In integrated circuits (ICs), the terms "master" and "slave" are commonly used in synchronous circuit designs.

The master transmits control signals to the slave, and the slave executes operations in accordance with the control signals received from the master. More specifically, when the master transmits a command to the slave for the execution of a specific task, the slave performs the operation corresponding to that command in accordance with the command received from the master. In this case, the master and slave may operate based on a clock signal to ensure precise synchronization. In accordance with this embodiment, the slave performs the role of processing a given task or data by operating in accordance with the clock signal or control signal transmitted from the master.

In a system composed of a master and a slave as described above (hereinafter referred to as a "master-slave system"), since the master controls the slave in accordance with the clock signal, the master and slave in the master-slave system can operate consistently. Through this, the master-slave system is able to consistently process data transmission or tasks.

However, in a typical master-slave system, a large number of wires are required for data transmission and reception. Consequently, the area required for wire routing increases, leading to spatial constraints or an increase in chip size.

### [Disclosure]

### [Technical Problem]

An object of the disclosure is to provide an image sensing device in which an additional gate is disposed on a photodiode in addition to a photo gate to transfer charge generated by the photodiode, an electronic device including the same, and an image sensing method.

### [Technical Solution]

A general-purpose serial communication device comprises a register file storing a Master Output Slave Input (MOSI) transmitted from a master device; a buffer including a plurality of flip-flops that perform a shift-left operation to the Master Output Slave Input in response to a clock signal transmitted from the master device; and a control circuit latching write data into upper flip-flops among the flip-flops and latching a write address into lower flip-flops among the flip-flops when the Master Output Slave Input includes the write data and the write address, the control circuit latching a read address into the lower flip-flops among the flip-flops and reading a read data corresponding to the read address in the register file to latch the read data into the upper flip-flops when the Master Output Slave Input includes the read address.

A microcontroller unit comprises a master device generating and outputting a clock signal and aster output slave input; and at least one slave device receiving the master input slave output in response to the clock signal received from the master device; wherein the at least one slave device comprises: a register file storing a Master Output Slave Input; a buffer including a plurality of flip-flops performing a shift-left operation to the Master Output Slave Input in response to the clock signal; and a control circuit latching a write data into upper flip-flops among the flip-flops and a write address into lower flip-flops among the flip-flops when the Master Output Slave Input includes the write data and the write address, the control circuit latching a read address into the lower flip-flops among the flip-flops and reading a read data corresponding to the read address in the register file to latch the read data into the upper flip-flops when the Master Output Slave Input includes the read address.In one or more embodiments, the control circuit may latch the write data into the upper flip-flops and latch the write address or the read address into the lower flip-flops in accordance with the shift-left operation when the control circuit receives a first-level latch enable signal and a first-level write enable signal.

In one or more embodiments, the control circuit may write the write data into an area corresponding to the write address in the register file when the control circuit receives a second-level latch enable signal and a second-level write enable signal.

In one or more embodiments, the control circuit may read the read data corresponding to the read address in the register file to latch the read data into the upper flip-flops when the control circuit receives the second-level latch enable signal and the first-level write enable signal from the master device.

In one or more embodiments, the control circuit may latch the write data into the upper flip-flops and may latch the write address or the read address into the lower flip-flops in accordance with the shift-left operation when the control circuit receives a first-level latch enable signal and a first-level write enable signal, may write the write data into an area corresponding to the write address in the register file when the control circuit receives a second-level latch enable signal and a second-level write enable signal, and may read the read data corresponding to the read address in the register file to latch the read data into the upper flip-flops when the control circuit receives the second-level latch enable signal and the first-level write enable signal from the master device.

In one or more embodiments, the control circuit may output the read data latched into the upper flip-flops to a Master Input Slave Output (MISO) in accordance with the shift-left operation in response to the clock signal.

In one or more embodiments, the register file may comprise: an address port connecting to output terminals of the lower flip-flops; a data input port connecting to output terminals of the upper flip-flops; a data output port outputting the read data; and a read and write control circuit determining on or off of the address port, the data input port and the data output port based on a latch enable signal and a write enable signal received from the master device.

In one or more embodiments, the read and write control circuit may determine whether the current operation is a write operation or a read operation based on a latch enable signal and a write enable signal.

In one or more embodiments, the read and write control circuit may turn on the address port, the data input port, and the data output port when the current operation is the write operation, and may turn on the address port and the data output port and turns off the data input port, when the current operation is the read operation.

In one or more embodiments, the read and write control circuit may determine whether the current operation is a write operation or a read operation based on a latch enable signal and a write enable signal, turns on the address port, the data input port, and the data output port when the current operation is the write operation, and may turn on the address port and the data output port and turns off the data input port, when the current operation is the read operation.

In one or more embodiments, the control circuit may determine reset of each of the lower flip-flops based on a latch enable signal received from the master device, when the lower flip-flops are respectively resettable flip-flops.

In one or more embodiments, when each of the upper flip-flops is RS flip-flop, the control circuit may determine set or reset of each of the upper flip-flops to latch the read data into the upper flip-flops based on a write enable signal, a latch enable signal received from the master device, and the read data read in the register file.

In one or more embodiments, the control circuit may comprise a first flip-flop latching a latch enable signal received from the master device in response to the clock signal, a first inverter inverting an output signal of the first flip-flop.

In one or more embodiments, the reset status of each of the lower flip-flops may be determined according to the output signal of the first inverter.

In one or more embodiments, the control circuit may comprise a first flip-flop latching a latch enable signal received from the master device in response to the clock signal, a first inverter inverting an output signal of the first flip-flop, a second flip-flop latching the write enable signal received from the master device in response to the clock signal, a second inverter inverting an output signal of the second flip-flop, a data flip-flop control circuit determining set or reset of each of the upper flip-flops to latch the read data into the upper flip-flops, based on the output signal of the first flip-flop, the output signal of the second inverter, and the read data read in the register file.

In one or more embodiments, the control circuit may comprise a first flip-flop latching a latch enable signal received from the master device in response to the clock signal, a first inverter inverting an output signal of the first flip-flop, a second flip-flop latching the write enable signal received from the master device in response to the clock signal, a second inverter inverting an output signal of the second flip-flop, a data flip-flop control circuit determining set or reset of each of the upper flip-flops to latch the read data into the upper flip-flops, based on the output signal of the first flip-flop, the output signal of the second inverter, and the read data read in the register file.

In one or more embodiments, the reset status of each of the lower flip-flops may be determined according to the output signal of the first inverter.

### [Advantageous Effects]

The general-purpose serial communications device and microcontroller unit including the same according to one embodiment may reduce the number of wires required for data transmission and reception while simultaneously improving reliability.

Furthermore, the general-purpose serial communications device and microcontroller unit including the same according to one embodiment may reduce the number of wires required for data transmission and reception, thereby reducing the area required for wire routing, which alleviates spatial constraints and allows for a reduction in chip size.

Furthermore, the general-purpose serial communications device and microcontroller unit including the same according to one embodiment may enable the implementation of a lock function that prohibits writing data to the register file, thereby improving reliability.

Furthermore, the general-purpose serial communications device and microcontroller unit including the same according to one embodiment may be easily varied, thereby improving scalability.

Furthermore, the general-purpose serial communications device and microcontroller unit including the same according to one embodiment may be initialized using only the clock signal continuously supplied from the master device, thereby improving ease of initialization and reliability.

Furthermore, the general-purpose serial communications device and microcontroller unit including the same according to one embodiment may be reduced, allowing the network topology of the master-slave architecture to be implemented in various forms, thereby improving scalability.

Furthermore, the general-purpose serial communications device and microcontroller unit including the same according to one embodiment may determine the clock signal, long-distance data transmission is made possible.

### [Description of Drawings]

The accompanying drawings, which are included to provide a further understanding of the disclosure and are incorporated in and constitute a part of this application, illustrate embodiments of the disclosure and together with the description serve to explain the principle of the disclosure. In the drawings:
FIG.1 is a block diagram of a microcontroller unit including a slave device according to an embodiment of the present invention.
FIG.2 is a conceptual block diagram illustrating the write operation performed using the control circuit shown in FIG. 1.
FIG. 3 is a flowchart illustrating the write operation of the slave device shown in FIG. 1.
FIG. 4 is a timing diagram of write data and write addresses illustrating the write operation of the slave device shown in FIG. 1.
FIG. 5 is a conceptual block diagram illustrating the read operation performed using the control circuit shown in FIG. 1.
FIG. 6 is a schematic diagram of the data flip-flop control circuit included in the control circuit shown in FIG. 2 or FIG. 5.
FIG. 7 is a truth table for the reset signal of the data flip-flop control circuit during the read operation.
FIG. 8 is a truth table for the set signal of the data flip-flop control circuit during the read operation.
FIG. 9 is a flowchart illustrating the read operation of the slave device shown in FIG. 1.
FIG.10 is a timing diagram of the read address and read data for illustrating the read operation of the slave device shown in FIG.1.
FIG. 11 illustrates an embodiment of a network topology comprising the master device and the slave devices shown in FIG. 1.
FIG.12 is another embodiment of a network topology comprising the master device and the slave device shown in FIG.1.
FIG.13 is yet another embodiment of a network topology comprising the master device and the slave device shown in FIG.1.

### [Mode for Invention]

In the specification, it should be noted that like reference numerals already used to denote like elements in other drawings are used for elements wherever possible. In the following description, when a function and a configuration known to those skilled in the art are irrelevant to the essential configuration of the present disclosure, their detailed descriptions will be omitted. The terms described in the specification should be understood as follows.

Advantages and features of the disclosure, and implementation methods thereof will be clarified through following embodiments described with reference to the accompanying drawings. The present disclosure may, however, be embodied in different forms and should not be construed as limited to the embodiments set forth herein. Rather, these embodiments are provided so that this disclosure will be thorough and complete, and will fully convey the scope of the present disclosure to those skilled in the art. Further, the present disclosure is only defined by scopes of claims.

A shape, a size, a ratio, an angle, and a number disclosed in the drawings for describing embodiments of the present disclosure are merely an example, and thus, the present disclosure is not limited to the illustrated details. Like reference numerals refer to like elements throughout. In the following description, when the detailed description of the relevant known function or configuration is determined to unnecessarily obscure the important point of the present disclosure, the detailed description will be omitted.

In a case where 'comprise', 'have', and 'include' described in the present specification are used, another part may be added unless 'only~' is used. The terms of a singular form may include plural forms unless referred to the contrary.

In construing an element, the element is construed as including an error range although there is no explicit description.

In describing a position relationship, for example, when a position relation between two parts is described as 'on~', 'over~', 'under~', and 'next~', one or more other parts may be disposed between the two parts unless 'just' or 'direct' is used.

It will be understood that, although the terms "first", "second", etc. may be used herein to describe various elements, these elements should not be limited by these terms. These terms are only used to distinguish one element from another. For example, a first element could be termed a second element, and, similarly, a second element could be termed a first element, without departing from the scope of the present disclosure.

The term "at least one" should be understood as including any and all combinations of one or more of the associated listed items. For example, the meaning of "at least one of a first item, a second item, and a third item" denotes the combination of all items proposed from two or more of the first item, the second item, and the third item as well as the first item, the second item, or the third item.

Features of various embodiments of the present disclosure may be partially or overall coupled to or combined with each other and may be variously inter-operated with each other and driven technically as those skilled in the art can sufficiently understand. The embodiments of the present disclosure may be carried out independently from each other, or may be carried out together in co-dependent relationship.

Hereinafter, embodiments of the present disclosure will be described in detail with reference to the accompanying drawings.

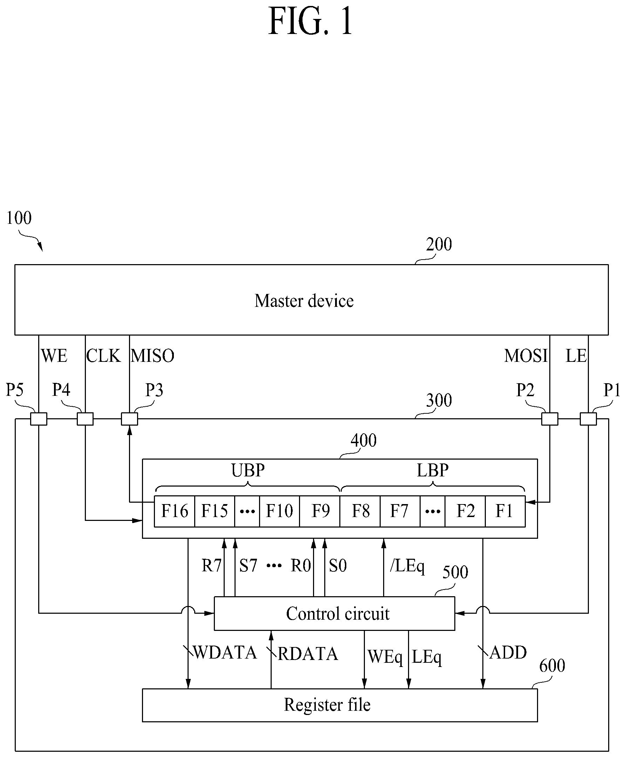

FIG. 1 is a block diagram of a microcontroller unit including a slave device according to an embodiment of the present invention.

Referring to FIG. 1, the microcontroller unit (MCU) 100 includes a master device 200 and a slave device 300. The master device 200 may also be referred to as a transmitter or a master, and the slave device 300 may also be referred to as a general-purpose serial communication device, a receiver, or a slave. Although FIG. 1 illustrates the microcontroller unit 100 as comprising only one master device 200 and one slave device 300, in other embodiments, the microcontroller unit 100 can include multiple slave devices, and in such embodiments, the multiple slave devices can each communicate with one master device 200.

In one embodiment, since the microcontroller unit 100 according to the present invention allows the master device 200 to determine the frequency of a clock signal CLK, the microcontroller unit 100 shown in FIG. 1 is capable of long-distance data transmission.

The master device 200 can control the write operation and read operation of the slave device 300.

The slave device 300 can transmit and receive data with the master device 200 via a highly reliable general-purpose serial communication interface. In one embodiment, the general-purpose serial communication interface may be an internal serial bus(ISB). An internal serial bus is a type of serial data transmission method used to transfer data within a computer system (e.g., an MCU). It is an interface designed for fast and efficient data communication between various hardware components.

The slave device 300 that communicates with the master device 200 via the general-purpose serial communication interface or the internal serial bus includes a plurality (e.g., 5) of pins P1-P5, a buffer 400, a control circuit 500, and a register file 600. Each of the pins P1-P5 may also be referred to as a port.

In particular, the slave device 300 according to the present invention may be configured without including a finite state machine FSM or a counter in order to reduce the number of wires required for data transmission and reception while simultaneously improving the reliability of the microcontroller unit 100. That is, the slave device 300 according to the present invention can reduce the number of wires and increase reliability by including a shift register and the register file 600, which are used as embodiments of the buffer 400. In this embodiment, the slave device 300 can easily initialize the buffer 400 using only the clock signal CLK continuously supplied by the master device 200.

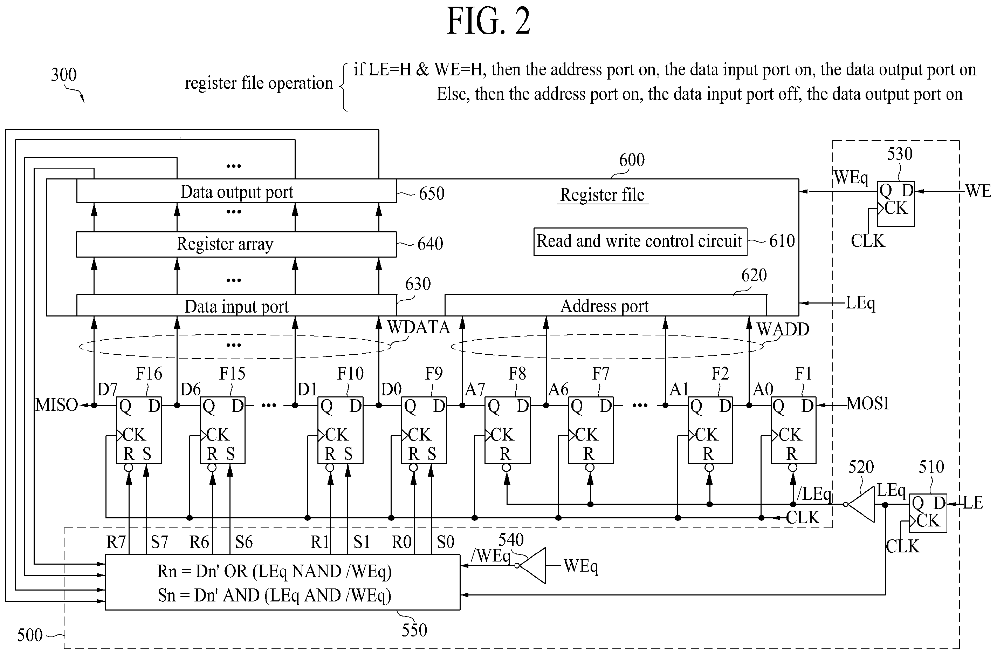

Hereinafter, with further reference to FIGs. 2 through 7, the operation of the slave device 300 according to the present invention will be described in more detail.

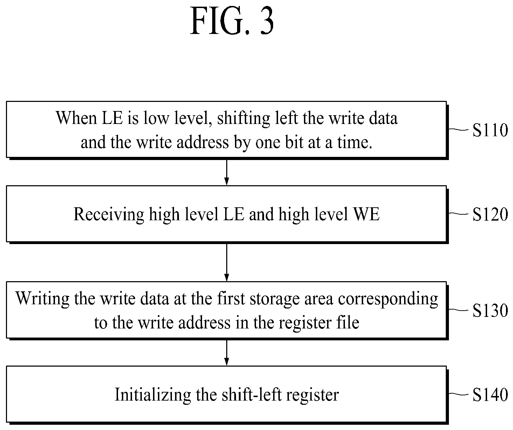

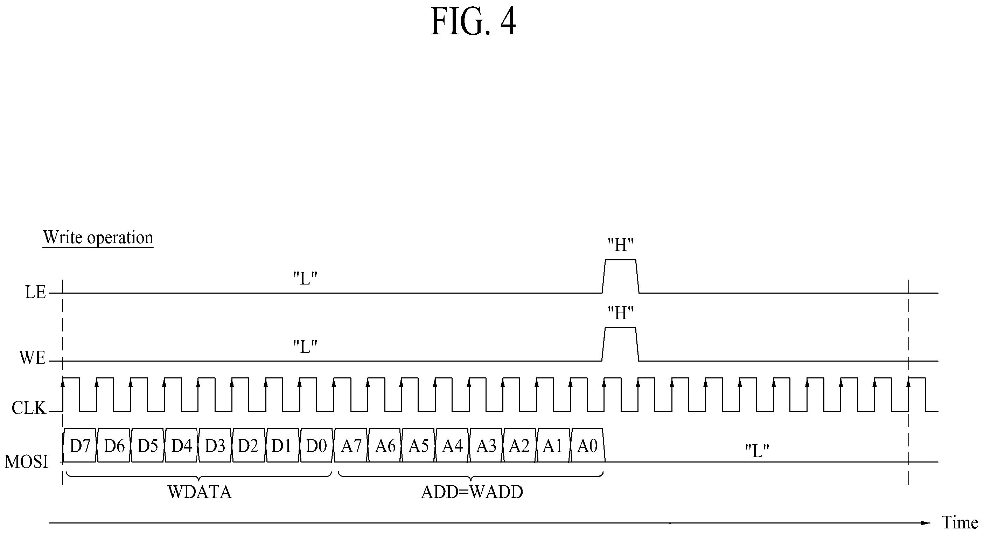

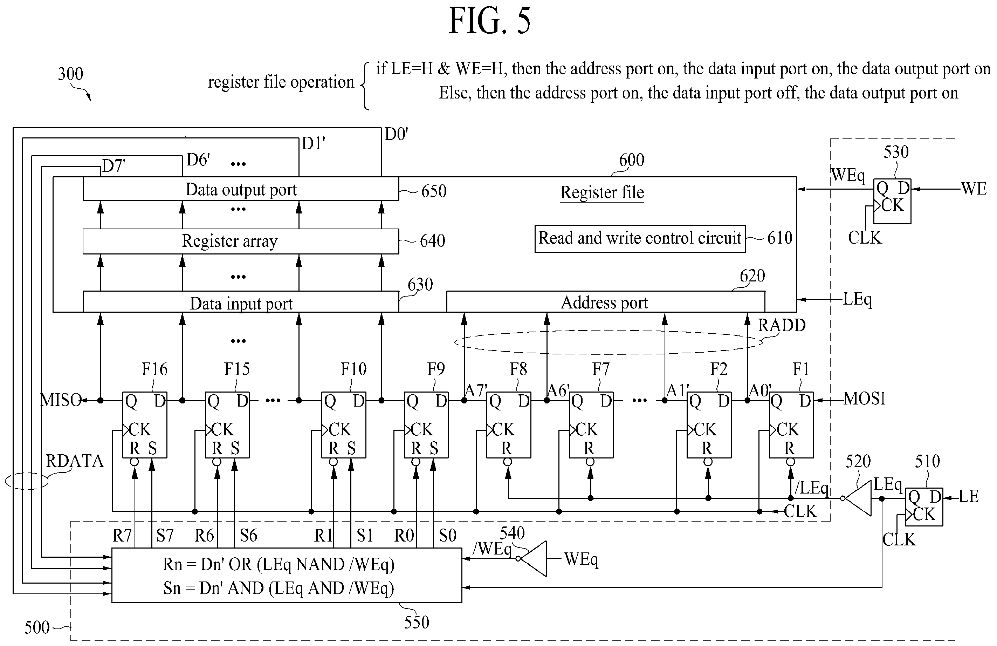

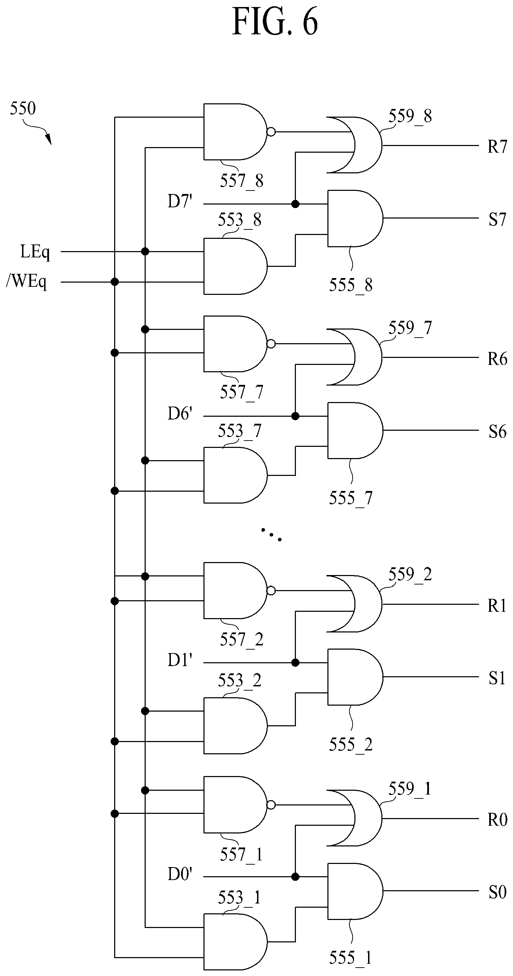

First, with reference to FIGs. 1 through 4 and FIG. 6, the write operation of the slave device 300 according to the present invention will be described. FIG. 2 is a conceptual block diagram illustrating the write operation performed using the control circuit shown in FIG. 1. FIG. 3 is a flowchart illustrating the write operation of the slave device shown in FIG. 1. FIG. 4 is a timing diagram of the write data and write address illustrating the write operation of the slave device shown in FIG. 1; FIG. 6 is a schematic diagram of the data flip-flop control circuit included in the control circuit shown in FIG. 2 or FIG. 5.

For the write operation, the slave device 300 receives a latch enable signal LE with a low level (L or data 0) from the master device 200 via the first pin P1, and receives a write enable signal WE via the fifth pin P5, and x-bit serial write data WDATA and y-bit serial write address ADD(=WADD) from the master device 200 via the second pin P2. In addition, the slave device 300 receives the clock signal CLK from the master device 200 via the fourth pin P4.

A Master Output Slave Input MOSI, which is input serially via the second pin P2, includes x-bit serial write data WDATA and y-bit serial write address ADD(=WADD). Here, x and y are each natural numbers of 2 or greater. Hereinafter, for convenience of description, x and y are each assumed to be 8. That is, the Master Output Slave Input MOSI can include 8-bit serial write address ADD(=WADD) and 8-bit serial write data WDATA.

In one embodiment, according to the present invention, since the master device 200 can respectively adjust x and y, the microcontroller unit 100 can have high scalability.

The buffer 400 is a shift register, for example, a shift-left register that sequentially receives the Master Output Slave Input MOSI and shifts it one bit at a time to the left in response to the rising edge (or, depending on the embodiment, the falling edge) of the clock signal (or clock) CLK received via the fourth pin P4. Hereinafter, for convenience of description, the term "buffer" 400 will be used interchangeably with "shift-left register" 400.

For example, if the master device 200 detects an anomaly or error in the Master Input Slave Output MISO transmitted from the slave device 300, the master device 200 may set the Master Output Slave Input MOSI to data 0. Accordingly, the shift-left register 400 can be initialized based on the Master Output Slave Input MOSI set to data 0 and the clock signal CLK.

The shift-left register 400 includes a first block (or lower-bit block) LBP comprising address flip-flops (or lower flip-flops) F1-F8 and a second block (or upper-bit block) UBP comprising data flip-flops (or upper flip-flops) F9-F16.

For example, during the write operation, the first block LBP functions as a serial-to-parallel converter that converts an 8-bit serial write address into an 8-bit parallel write address, while the second block UBP functions as a serial-to-parallel converter that converts 8-bit serial write data into 8-bit parallel write data.

Meanwhile, during the read operations, the first block LBP functions as a serial-to-parallel converter that converts 8-bit serial read address into 8-bit parallel read address, while the second block UBP functions as a parallel-to-serial converter that converts 8-bit parallel read data into 8-bit serial read data.

As shown in FIG. 2, each of the address flip-flops F1-F8 can be a first-type flip-flop, and each of the data flip-flops F9-F16 can be a second-type flip-flop. In one embodiment, the first-type flip-flops F1-F8 can be resettable flip-flops, and the second-type flip-flops F9-F16 can be SR (Set and Reset) flip-flops. The clock signal CLK is input to the clock terminal CK of each flip-flop F1-F16. Unlike the aforementioned embodiment, each flip-flop F1-F16 comprising a reset terminal R can perform a low-active or active-low reset operation.

The control circuit 500 includes a first flip-flop 510, a first inverter 520, a second flip-flop 530, a second inverter 540, and a data flip-flop control circuit 550. In the data flip-flop control circuit 550, n may have a value of 0, 1, 2, 3, 4, 5, 6, or 7.

The first flip-flop 510 can latch the latch enable signal LE in response to the rising edge of the clock signal CLK to generate a first latch enable signal LEq. The first flip-flop 510 can be a D flip-flop. The latch enable signal LE and the first latch enable signal LEq are the same signal.

The first inverter 520 can invert the first latch enable signal LEq to generate a second latch enable signal /LEq. When the second latch enable signal /LEq, which is input to the reset terminals R of the address flip-flops F1-F8, is at a low level, the address flip-flops F1-F8 are reset or initialized.

The second flip-flop 530 can latch the write enable signal WE in response to the rising edge of the clock signal CLK to generate the first write enable signal WEq. The second flip-flop 530 can be a D flip-flop. The write enable signal WE and the first write enable signal WEq are the same signal.

The second inverter 540 can invert the first write enable signal WEq to generate a second write enable signal /WEq.

The data flip-flop control circuit 550 can control the operation of each of the data flip-flops F9-F16 in response to the first latch enable signal LEq and the second write enable signal /WEq during the write operation. Furthermore, during the read operation, the data flip-flop control circuit 550 can control the operation of each of the data flip-flops F9-F16 in response to the first latch enable signal LEq, the second write enable signal /WEq, and x-bit parallel read data RDATA.

The register file 600 can write 8-bit write data WDATA to the first storage area of a register array 640 corresponding to the write address WADD based on the first latch enable signal LEq and the first write enable signal WEq, and can read 8-bit read data RDATA from a second storage area of the register array 640 corresponding to the read address RADD and transmit it to the control circuit 500.

Furthermore, the register file 600 may provide a locking function. For example, the register file 600 may determine whether the write address WADD matches a previously set write address, and generate an unlock signal or a lock signal when the write address WADD matches the previously set write address. When the unlock signal is generated, the register file 600 can allow write data to be written to the register array 640, and when the lock signal is generated, the register file 600 can prohibit write data from being written to the register array 640.

For example, a read and write control circuit 610 determines whether the write address WADD matches a previously set write address, and can control access operations (e.g., write operations or read operations) to the register array 640 based on the unlock or lock signal corresponding to this determination.

The register file 600 includes the read and write control circuit 610, an address port 620, a data input port 630, the register array 640 comprising a plurality of registers, and a data output port 650.

When the latch enable signal LE is at a low level L and the write enable signal WE is at a low level L, the first inverter 520 outputs the second latch enable signal /LEq at a high level H, causing each address flip-flop F1-F8 to operate normally without being reset, thereby performing a shift-left operation.

Specifically, referring to FIG. 6, when the latch enable signal LE is at a low level L and the write enable signal WE is at a low level L, since the first latch enable signal LEq is at a low level L and the second write enable signal /WEq is at a high level H, the output signals of each AND gate 553_1-553_8 are at a low level, and the output signals of each NAND gate 557_1-557_8 are at a high level.

Therefore, regardless of the level of each data bit D0'-D7', the output signals S0-S7 of each AND gate 555_1-555_8 are at a low level L, and the output signals R0-R7 of each OR gate 559_1-559_8 are at a high level. Since reset signals R0-R7 with a high level are input to the reset terminals R of each data flip-flop F9-F16, and set signals S0-S7 with a low level are input to the set terminals S of each data flip-flop F9-F16, each data flip-flop F9-F16 operates normally and performs the shift-left operation.

Here, "operating normally" means that the 8-bit serial write data (WDATA=D7D6D5D4D3D2D1D0) and the 8-bit serial write address (ADD=WADD=A7A6A5A4A3A2A1A0) are sequentially shifted left by one bit at a time by the flip-flops F1-F16 that operate in response to the rising edge of the clock signal CLK (S110).

Therefore, the MSB (Most Significant Bit) of the 8-bit serial write data (WDATA=D7D6D5D4D3D2D1D0), which was input to the shift-left register 400 before the 8-bit serial write address (ADD=WADD=A7A6A5A4A3A2A1A0), that is, D7 is latched into the 16th flip-flop F16, and the LSB (Least Significant Bit) of the 8-bit serial write data (WDATA=D7D6D5D4D3D2D1D0), that is, D0, is latched into the 9th flip-flop F9, and the MSB of the 8-bit serial write address (ADD=WADD=A7A6A5A4A3A2A1A0), that is, A7, is latched into the 8th flip-flop F8, and the LSB of the 8-bit serial write address (ADD=WADD=A7A6A5A4A3A2A1A0), that is, A0, is latched into the 1st flip-flop F1 (S110).

In the aforementioned embodiment, the input terminal D of the first flip-flop F1 is connected to the second pin P2, and the output terminal Q of the 16th flip-flop F16 may be connected to the third pin P3. In this case, the third pin P3 is a pin for transmitting the Master Input Slave Output MISO to the master device 200. That is, the 16 flip-flops F1-F16 can be connected in series between the second pin P2 and the third pin P3.

In the aforementioned embodiment, the buffer 400 has been described as a shift-left register that sequentially shifts the Master Output Slave Input MOSI one bit at a time to the left. However, this is merely one example, the buffer 400 could also be implemented as a shift-right register that sequentially shifts the Master Output Slave Input MOSI one bit at a time to the right. In this case, the third pin P3 becomes the MISO pin and the second pin P2 becomes the MOSI pin, the input terminal D of the first flip-flop F1 among the 16 flip-flops F1-F16 is connected to the third pin P3, and the output terminal Q of the last flip-flop F16 is connected to the second pin P2.

Each signal LE, MOSI, CLK, and WE is transmitted from the master device 200 to the slave device 300 via a single wire, and the Master Input Slave Output MISO is transmitted from the slave device 300 to the master device 200 via a single wire. Hereinafter, since the wire transmits signals between the master device 200 and the slave device 300, the wire will be referred to as a signal transmission line.

The register file 600, for example, the read and write control circuit 610 included in the register file 600 can determine whether the current operation is the write operation or the read operation based on the latch enable signal LE and the write enable signal WE, more specifically based on the first latch enable signal LEq and the first write enable signal WEq.

For example, when the latch enable signal LE is at a high level H and the write enable signal WE is at a high level H, the read and write control circuit 610 of the register file 600 can determine that the current operation is the write operation. Furthermore, when the latch enable signal LE is at a high level H and the write enable signal WE is at a low level L, the read and write control circuit 610 of the register file 600 can determine that the current operation is the read operation.

When the latch enable signal LE is at a low level L and the write enable signal WE is at a low level L, the read and write control circuit 610 of the register file 600 turns the address port 620 on, turns the data input port 630 off, and turns the data output port 650 on. The address port 620 may remain in the on state at all times to receive the write address WADD or the read address RADD.

Therefore, the 8-bit serial write address (ADD=WADD=A7A6A5A4A3A2A1A0) latched in the address flip-flops F8-F1 can be input to the read and write control circuit 610 via the address port 620, which is turned on.

After the 8-bit serial write data (WDATA=D7D6D5D4D3D2D1D0) and the 8-bit serial write address (WADD=A7A6A5A4A3A2A1A0) are sequentially latched into the flip-flops F1-F16 based on the rising edge of the clock signal CLK, the master device 200 transmits the latch enable signal LE at a high level H to the first pin P1 and the write enable signal WE at a high level H to the fifth pin P5.

When the latch enable signal LE is at a high level H and the write enable signal WE is at a high level H (S120), the read and write control circuit 610 turns on the data input port 630.

Consequently, according to the control of the read and write control circuit 610, the 8-bit parallel write data (WDATA=D7D6D5D4D3D2D1D0) is written to the first storage area of the register array 640 corresponding to the 8-bit write address (A7A6A5A4A3A2A1A0)(S130).

Furthermore, since the latch enable signal LE is at a high level H and the write enable signal WE is at a high level H (S120), the address flip-flops F1-F8 are reset in response to the second latch enable signal /LEq at a low level L.

Furthermore, since the latch enable signal LE is at a high level H and the write enable signal WE is at a high level H (S120), as shown in FIG. 6, the output signal of each AND gate 553_1-553_8 included in the data flip-flop control circuit 550 are at a low level L, the output signals of each NAND gate 557_1-557_8 are at a high level H, and regardless of the logic level of each data bit D0'-D7', the output signals S0-S7 of each AND gate 555_1-555_8 are at a low level L, and the output signals R0-R7 of each OR gate 559_1-559_8 are at a high level H. Consequently, each data flip-flop F9-F16 operates normally, performing the shift-left operation.

The eighth flip-flop F8 outputs a signal with a low level L according to the initialization of the address flip-flops F1-F8, therefore, each of the data flip-flops F9-F16 is sequentially initialized to a low level L in response to the rising edge of the clock signal CLK (S140). In other words, after the write operation is complete, the buffer 400 including the flip-flops F1-F16 is initialized in accordance with the toggling of the clock signal CLK.

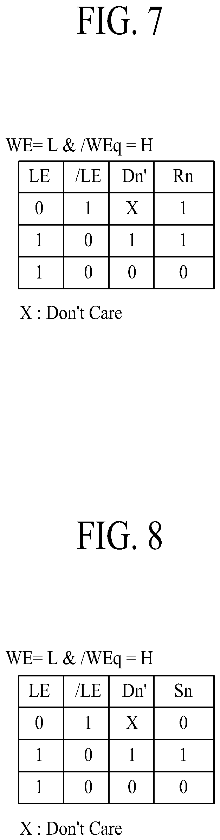

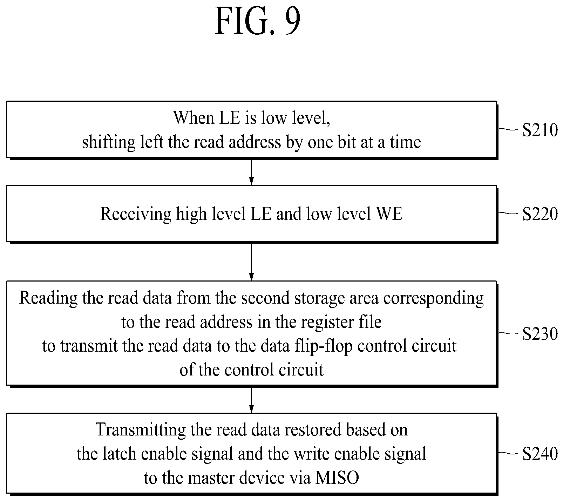

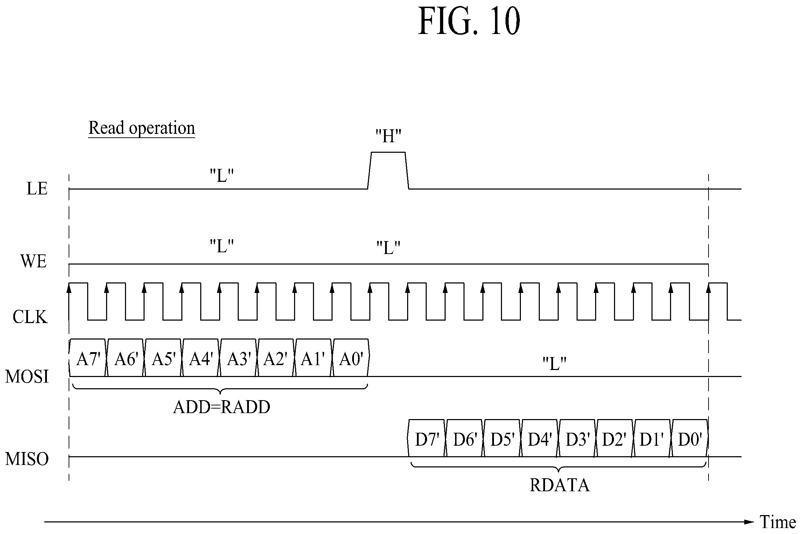

FIG. 5 is a conceptual block diagram illustrating the read operation performed using the control circuit shown in FIG. 1, FIG. 7 is a truth table for the reset signal of the data flip-flop control circuit during the read operation, and FIG. 8 is a truth table for the set signal of the data flip-flop control circuit during the read operation, FIG. 9 is a flowchart illustrating the read operation of the slave device shown in FIG. 1, and FIG. 10 is a timing diagram of the read address and read data for illustrating the read operation of the slave device shown in FIG. 1.

Hereinafter, the read operation of the slave device 300 will be described with reference to FIGs. 1, 5 through 10. In FIGs. 8 and 9, n may represent any number from 0 to 7.

For the read operation, the slave device 300 receives the latch enable signal LE with a low level L from the master device 200 via the first pin P1, and receives the write enable signal WE with a low level L from the master device 200 via the fifth pin P5, receives a y-bit serial read address (ADD=RADD=A7'A6'A5'A4'A3'A2'A1'A0') from the master device 200 via the second pin P2, and receives the clock signal CLK from the master device 200 via the fourth pin P4.

During the read operation, the Master Output Slave Input MOSI input via the second pin P2 includes an 8-bit serial read address ADD(=RADD=A7'A6'A5'A4'A3'A2'A1'A0').

Referring to FIGs. 9 and 10, when the latch enable signal LE is at a low level L and the write enable signal WE is at a low level L, the first latch enable signal LEq is at a low level L and the second write enable signal /WEq is at a high level (H), therefore, each address flip-flop F1-F8 responds to the second latch enable signal /LEq, which is at a high level H, and does not reset, operating normally to perform the shift-left operation.

Accordingly, the 8-bit serial read address ADD(=RADD=A7'A6'A5'A4'A3'A2'A1'A0') received via the second pin P2, i.e., A7', is shifted left in accordance with the clock signal CLK and latched into the eighth flip-flop F8, and the 8-bit serial read address ADD(=RADD=A7'A6'A5'A4'A3'A2'A1'A0'), i.e., A0', is latched into the first flip-flop F1 in accordance with the clock signal CLK (S210).

Furthermore, when the latch enable signal LE is at a low level L and the write enable signal WE is at a low level L, the read and write control circuit 610 can turn the address port 620 on, turn the data input port 630 off, and turn the data output port 650 on.

Therefore, the 8-bit parallel read address ADD(=RADD=A7'A6'A5'A4'A3'A2'A1'A0') latched into the address flip-flop F8-F1 can be input to the read and write control circuit 610 via the address port 620, which is turned on.

After the 8-bit serial read address ADD(=RADD=A7'A6'A5'A4'A3'A2'A1'A0') is sequentially latched into eight address flip-flops F8-F10 based on the rising edge of the clock signal CLK, the master device 200 transmits the latch enable signal LE with a high level H to the first pin P1 and the write enable signal WE with a low level L to the fifth pin P5(S220).

When the latch enable signal LE is at a high level H and the write enable signal WE is low L (S220), the read and write control circuit 610 reads data RDATA(=D7'D6'D5'D4'D3'A2'A1'A0') from the second storage area of the register array 640 and transmits it to the data flip-flop control circuit 550 (S230).

Furthermore, since the latch enable signal LE is at a high level H and the write enable signal WE is at a low level L (S220), after the 8-bit parallel read address ADD(=RADD=A7'A6'A5'A4'A3'A2'A1'A0') is transmitted to the read and write control circuit 610 via the address port 620 that is turned on, the address flip-flops F1-F8 are reset in response to the second latch enable signal /LEq with a low level L.

However, since the latch enable signal LE is high H and the second write enable signal /WEq is at a high level H, as shown in FIG. 6, the output signals of each AND gate 553_1-553_8 are at a high level, and the output signals of each NAND gate 557_1-557_8 are at a low level.

As can be seen in the truth table in FIG. 7, the output signals R0-R7 of each OR gate 559_1-559_8 are determined to be either a high level H or a low level L depending on the level of the respective read data RDATA(=D7'D6'D5'D4'D3'D2'D1'D0') and, as shown in the truth table in FIG. 8, the output signals S0-S7 of each AND gate 555_1-555_8 are determined to be either a high level H or a low level L depending on the level of the respective read data RDATA(=D7'D6'D5'D4'D3'D2'D1'D0').

For example, when the 8-bit parallel read data RDATA(=D7'D6'D5'D4'D3'D2'D1'D0') is 8b'01010101, the output signals S0, S2, S4, and S6 of each AND gate 555_1, 555_3, 555_5, and 555_7 are at a high level H, while the output signals S1, S3, S5, and S7 of the respective AND gates 555_2, 555_4, 555_6, and 555_8 are at a low level L, and the output signals R0, R2, R4, and R6 of each OR gate 559_1, 559_3, 559_5, and 559_7 are at a high level H, and the output signals R1, R3, R5, and R7 of each OR gate 559_2, 559_4, 559_6, and 559_8 are at a low level L.

Therefore, each flip-flop F16, F14, F12, and F10 is reset and latches 0, while each flip-flop F15, F13, F11, and F9 is set and latches 1.

Meanwhile, when the data flip-flop control circuit 550 receives 8-bit parallel read data RDATA(=D7'D6'D5'D4'D3'D2'D1'D0') from the register file 600 (S230), restores the 8-bit parallel read data RDATA(=D7'D6'D5'D4'D3'D2'D1'D0') and latches into the data flip-flops F16-F9 according to the first latch enable signal LEq with a high level H and the second write enable signal /WEq with a high level H.

Subsequently, the read data RDATA(=D7'D6'D5'D4'D3'D2'D1'D0') latched into the data flip-flops F16-F9 is transmitted serially, one bit at a time, to the master device 200 via the third pin P3 in response to the rising edge of the clock signal CLK(S240). Consequently, the Master Input Slave Output MISO includes 8-bit serial read data RDATA(=D7'D6'D5'D4'D3'D2'D1'D0).

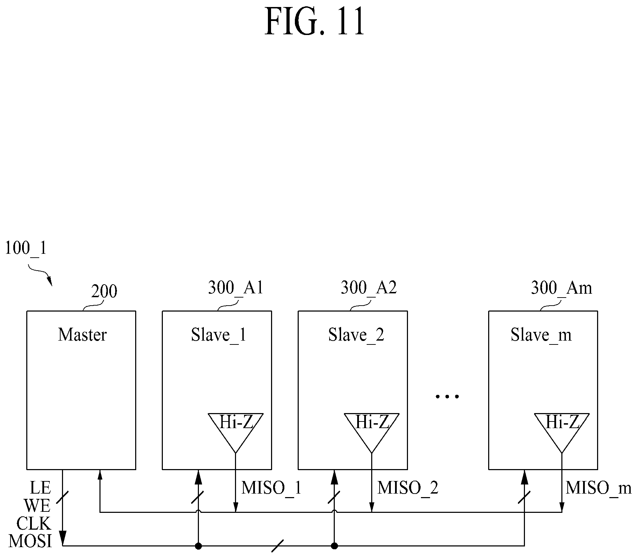

FIG. 11 illustrates an embodiment of a network topology comprising the master device and the slave devices shown in FIG. 1. The network topology 100_1 shown in FIG. 11 is a line topology comprising one master device 200 and m slave devices 300_A1~300_Am(where m is a natural number of 2 or greater). The structure and method of operation of each slave device 300_A1~300_Am are identical to those of the slave device 300 described with reference to FIGs. 1 through 10.

The state of the driver driving the Master Input Slave Output MISO_1~MISO_m in each of the slave devices 300_A1~300_Am can be a high-impedance state Hi-Z. The high-impedance state Hi-Z can be a state in which the driver does not output a signal or is designed so that the driver does not affect the connected circuit.

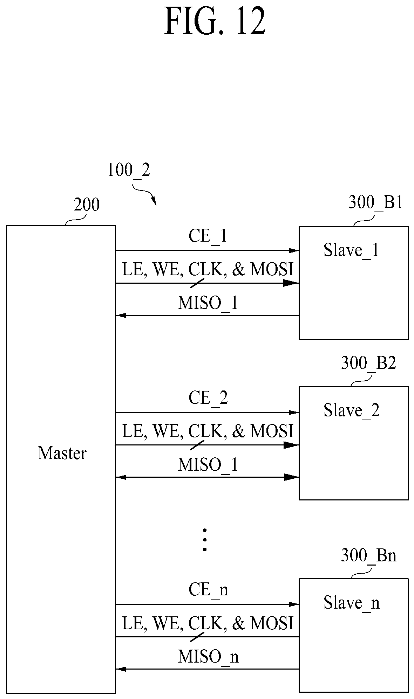

FIG.12 is another embodiment of a network topology comprising the master device and the slave device shown in FIG.1. The network topology 100_2 shown in FIG. 12 is a star topology comprising one master device 200 and n slave devices 300_B1 to 300_Bn(where n is a natural number of 2 or greater), and the structure and method of operation of each slave device 300_B1 to 300_Bn are identical to those of the slave device 300 described with reference to FIGs. 1 through 10.

In this embodiment, the master device 200 can transmit enable signals CE_1~CE_n to each slave device 300_B1~300_Bn to enable them. For example, at any given time, the master device 200 may activate only one of the enable signals CE_1 to CE_n.

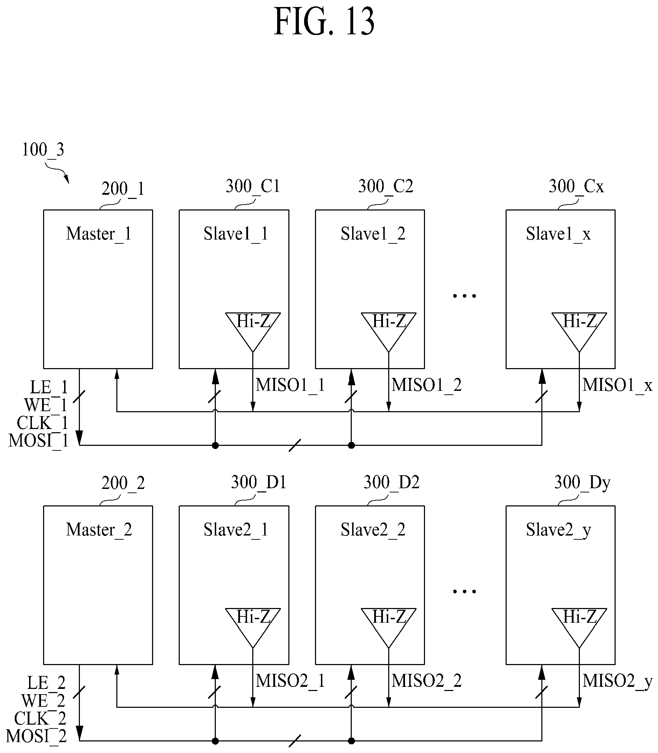

FIG.13 is yet another embodiment of a network topology comprising the master device and the slave device shown in FIG.1. The network topology 100_3 shown in FIG. 13 is a mixed topology, wherein the first master device 200_1 and each of the slave devices in the first group 300_C1 to 300_Cx can exchange data, and the second master device 200_2 and each of the slave devices in the second group 300_D1 to 300_Dx can exchange data. The structure and operation of each slave device 300_C1-300_Cx and 300_D1-300_Dy are identical to the structure and operation of the slave device 300 described with reference to FIGs. 1 through 10.

The drivers driving the Master Input Slave Output MISO1_1-MISO1_x in each of the slave devices 300_C1-300_Cx in the first group are high-impedance Hi-Z, and the driver driving the Master Input Slave Output MISO2_1~MISO2_y in each of the slave devices 300_D1~300_Dx of the second group is high-impedance Hi-Z.

### [Industrial Applicability]

The present disclosure can be applicable to general-purpose serial communication device and microcontroller unit, and thus has industrial applicability.

## Claims

1. A general-purpose serial communication device comprising:
a register file (600) storing a Master Output Slave Input (MOSI) transmitted from a master device (200);
a buffer (400) including a plurality of flip-flops (F1-F16) that perform a shift-left operation to the Master Output Slave Input in response to a clock signal transmitted from the master device (200); and
a control circuit (500) latching write data into upper flip-flops (F9-F16) among the flip-flops (F1-F16) and latching a write address into lower flip-flops (F1-F8) among the flip-flops (F1-F16) when the Master Output Slave Input includes the write data and the write address, the control circuit (500) latching a read address into the lower flip-flops (F1-F8) among the flip-flops (F1-F16) and reading a read data corresponding to the read address in the register file (600) to latch the read data into the upper flip-flops (F9-F16) when the Master Output Slave Input includes the read address.

2. The general-purpose serial communication device of claim 1, wherein the control circuit (500) latches the write data into the upper flip-flops (F9-F16) and latches the write address or the read address into the lower flip-flops (F1-F8) in accordance with the shift-left operation when the control circuit (500) receives a first-level latch enable signal and a first-level write enable signal.

3. The general-purpose serial communication device of claim 1 or 2, wherein the control circuit (500) writes the write data into an area corresponding to the write address in the register file (600) when the control circuit (500) receives a second-level latch enable signal and a second-level write enable signal.

4. The general-purpose serial communication device of any one of claims 1, 2 or 3, wherein the control circuit (500) reads the read data corresponding to the read address in the register file (600) to latch the read data into the upper flip-flops (F9-F16) when the control circuit (500) receives the second-level latch enable signal and the first-level write enable signal from the master device (200).

5. The general-purpose serial communication device of any one of the preceding claims, wherein the control circuit (500) latches the write data into the upper flip-flops (F9-F16) and latches the write address or the read address into the lower flip-flops (F1-F8) in accordance with the shift-left operation when the control circuit (500) receives a first-level latch enable signal and a first-level write enable signal, writes the write data into an area corresponding to the write address in the register file when the control circuit (500) receives a second-level latch enable signal and a second-level write enable signal, and reads the read data corresponding to the read address in the register file (600) to latch the read data into the upper flip-flops (F9-F16) when the control circuit (500) receives the second-level latch enable signal and the first-level write enable signal from the master device (200).

6. The general-purpose serial communication device of any one of the preceding claims wherein the control circuit (500) outputs the read data latched into the upper flip-flops (F9-F16) to a Master Input Slave Output(MISO) in accordance with the shift-left operation in response to the clock signal.

7. The general-purpose serial communication device of any one of the preceding claims, wherein the register file (600) comprises:
an address port (620) connecting to output terminals of the lower flip-flops (F1-F8);
a data input port (630) connecting to output terminals of the upper flip-flops (F9-F16);
a data output port (650) outputting the read data;
a read and write control circuit (610) determining on or off of the address port (620), the data input port (630) and the data output port (650) based on a latch enable signal and a write enable signal received from the master device (200).

8. The general-purpose serial communication device of claim 7, wherein the read and write control circuit (610) determines whether the current operation is a write operation or a read operation based on a latch enable signal and a write enable signal.

9. The general-purpose serial communication device of claim 7 or 8, wherein the read and write control circuit (610) turns on the address port (620), the data input port (630), and the data output port (650) when the current operation is the write operation, and turns on the address port (620) and the data output port (650) and turns off the data input port (630), when the current operation is the read operation.

10. The general-purpose serial communication device of claim 7, 8 or 9, wherein the read and write control circuit (610) determines whether the current operation is a write operation or a read operation based on a latch enable signal and a write enable signal, turns on the address port (620), the data input port (630), and the data output port (650) when the current operation is the write operation, and turns on the address port (620) and the data output port (650) and turns off the data input port (630), when the current operation is the read operation.

11. The general-purpose serial communication device of any one of the preceding claims, wherein the control circuit (610) determines reset of each of the lower flip-flops (F1-F8) based on a latch enable signal received from the master device (200), when the lower flip-flops (F1-F8) are respectively resettable flip-flops.

12. The general-purpose serial communication device of any one of the preceding claims, wherein when each of the upper flip-flops (F9-F16) is RS flip-flop, the control circuit (500) determines set or reset of each of the upper flip-flops (F9-F16) to latch the read data into the upper flip-flops (F9-F16) based on a write enable signal, a latch enable signal received from the master device (200), and the read data read in the register file (600).

13. The general-purpose serial communication device of any one of the preceding claims, wherein the control circuit (500) comprises:
a first flip-flop (F1) latching a latch enable signal received from the master device (200) in response to the clock signal,
a first inverter (520) inverting an output signal of the first flip-flop (F1),
wherein the reset status of each of the lower flip-flops (F1-F8) is determined according to the output signal of the first inverter (520).

14. The general-purpose serial communication device of any one of the preceding claims, wherein the control circuit (500) comprises:
a first flip-flop (F1) latching a latch enable signal received from the master device (200) in response to the clock signal,
a first inverter (520) inverting an output signal of the first flip-flop (F1),
a second flip-flop (F2) latching the write enable signal received from the master device (200) in response to the clock signal,
a second inverter (540) inverting an output signal of the second flip-flop (F2),
a data flip-flop control circuit (550) determining set or reset of each of the upper flip-flops (F9-F16) to latch the read data into the upper flip-flops (F9-F16), based on the output signal of the first flip-flop (F1), the output signal of the second inverter (520), and the read data read in the register file (600).

15. The general-purpose serial communication device of any one of the preceding claims, wherein the control circuit (500) comprises:
a first flip-flop (F1) latching a latch enable signal received from the master device in response to the clock signal,
a first inverter (520) inverting an output signal of the first flip-flop (F1),
a second flip-flop (F2) latching the write enable signal received from the master device (200) in response to the clock signal,
a second inverter (540) inverting an output signal of the second flip-flop (F2),
a data flip-flop control circuit (550) determining set or reset of each of the upper flip-flops (F9-F16) to latch the read data into the upper flip-flops (F9-F16), based on the output signal of the first flip-flop (F1), the output signal of the second inverter (540), and the read data read in the register file (600),
wherein the reset status of each of the lower flip-flops (F1-F8) is determined according to the output signal of the first inverter (520).
